# EUROPÄISCHE PATENTSCHRIFT

(11) **EP 2 106 940 B1**
(45) Veröffentlichungstag und Bekanntmachung des Hinweises auf die Patenterteilung: **13.07.2011**
(21) Anmeldenummer: 09002915.8
(22) Anmeldetag: 28.02.2009
(51) Int. Cl.: B60H 1/00

(54) **ABC-dichtes Fahrzeug mit CO2-Sensoren sowie Verfahren zur Innenraumluftgüteregelung**
NBC-sealed vehicle with CO2 sensors and method for regulating the quality of internal air
Véhicule étanche NBC doté de capteurs de CO2 et procédé de régulation de l'air à l'intérieur

(30) Priorität: 04.04.2008 DE 102008017521
(43) Veröffentlichungstag der Anmeldung: 07.10.2009
(73) Patentinhaber: Rheinmetall Landsysteme GmbH, 24107 Kiel (DE)
(72) Erfinder: Stulgies, Baldur, Dr., 34359 Reinhardshagen (DE); Bräutigam, Martin, 34117 Kassel (DE); Gleim, Harald, 36179 Bebra (DE)
(74) Vertreter: Dietrich, Barbara

(56) Entgegenhaltungen:
- DE-A1- 10 259 973
- DE-A1-102005 027 072
- US-A- 4 631 872
- US-A1- 2006 234 621

## Beschreibung

Die Erfindung betrifft insbesondere den Einsatz eines CO₂ - Sensors in einem ABC- dichten Fahrzeug oder Labor oder dergleichen mit einer vorzugsweise fahrzeugeigenen ABC-Schutzbelüftungsanlage.

Dokument DE 10 2005 027 072 A1, das als nächstliegender Stand der Technik angesehen wird, offenbart ein ABC- dichtes Fahrzeug mit einer ABC-Schutzbelüftungsanlage und einem ABC- Filter, einer Regel- bzw. Steuereinrichtung, die mit einem oder mehreren Sensoren innerhalb eines Fahrzeuginnenraumes verbunden ist, sowie einem Speicher mit hinterlegten Schwellwerten über die Luftgüte des Fahrzeuginnenraumes, sowie weitere chemische Sensoren außerhalb bzw. innerhalb des Fahrzeugs.

Aus der DE 10 2004 021 663 A1 ist eine Vorrichtung bekannt, die mit mehreren Sensoren ausgestattet zur Feststellung mehrerer Alarmbedingungen und dabei zur Überwachung und Prüfung eines Luftstromes durch Heizungs-/ Lüftungs- / Klimatechnik- Rohre dient. Berücksichtig werden Änderungen der Umgebungsbedingungen, wie Rauch, Hitze, Gas und / oder relative Luftfeuchte.

Die DE 10 2004 024 284 A1 beschäftigt sich mit einem Verfahren und einer Vorrichtung zur Durchführung von Gefahrabwendungsmaßnahmen für Lebewesen in Kraftfahrzeugen. Erfasst wird der Kohlendioxidgehalt bzw. der Anstieg dieser Größe in der Luft des Fahrzeuginnenraumes sowie eine die Raumtemperatur repräsentierende Temperaturgröße. Diese Größe wird mit einem Temperaturschwellwert verglichen. Für den Fall, dass dieser Schwellwert als auch ein Kohlendioxidschwellwert überschritten wird, werden Gefahrabwendungsmaßnahmen eingeleitet.

Mit der DE 10 2004 051 912 A1 wird ein Verfahren zur Steuerung einer Klimaanlage insbesondere eines Frischluftanteils und eines Umluftanteils eines Kraftfahrzeugs offenbart, wobei ein Sollwert einer Innenraumtemperatur des Kraftfahrzeugs vorgegeben wird. Zusätzlich wird ein CO₂ Anteilswert der Innenraumluft gemessen. Wenn der CO₂ Anteilswert einen vorbestimmten Schwellwert unterschreitet, wird der Frischluftanteil reduziert.

In der DE 10 2005 048 910 A1, die eine Regelvorrichtung für eine Klimaanlage mit CO₂ als Kältemittel beinhaltet, wird durch die Regelvorrichtung die Luft aus dem Fahrzeuginnenraum nach außen abgeführt und Frischluft bei einer Zwangsbe- und / oder -entlüftung zugeführt

Ein CO₂ Sensor ist der DE 2005 047 949 A1 entnehmbar, aus der DE 10 2004 028 433 B4 ein IR- Sensor, insbesondere CO₂ -Sensor. Die DE 698 29 977 T2 beschreibt einen optischen CO₂- Sensor. Mit der US 7,112,447 B2 wird ein tragbares Analysegerät publiziert.

Eine Anordnung zur Messung der CO₂-Konzentration in Gasen wird des Weiteren in der DE 10 2006 036 366 A1 offenbart.

Aus ADACmotorwelt 2/2008, S. 33, ist ein CO₂ -Sensor bekannt, mit Hilfe dessen rechtzeitig frische Außenluft in das Wageninneren gelangt, wobei die Klimaanlage durch den Sensor bedarfsgerecht gesteuert wird.

Auch bei Fahrzeugen, deren Mannschaftsraum bzw. Fahrkabine hermetisch gegen die Umwelt abgedichtet sein müssen, wie beispielsweise bei ABC- Fahrzeugen oder ABC- Labore etc., nimmt der Sauerstoffgehalt in Abhängigkeit der Besatzungsanzahl und der Zeit ihres Einsatzes ab, wenn keine Frischluft von außen zugeführt wird. Eine bekannte Maßnahme ist dann, dass das Fahrzeug zum Belüften aus der Gefahrenzone gebracht wird, was aber nicht immer durchführbar ist, oder das eine fahrzeugeigene ABC- Schutzbelüftung bei Betrieb des Fahrzeugs eingeschaltet wird, was einen hohen Energiebedarf mit sich bringt, da generell die Schutzbelüftung bei Verdacht der Kontamination eingeschaltet wird. Der sich dabei aufbauende Überdruck schützt dann vor dem Eindringen von Kampfstoffen durch mögliche Fahrzeugleckagen.

Der Erfindung liegt daher die Aufgabe zugrunde, auf einfache Art und Weise für eine ausreichende Belüftung eines abgedichteten Innenraums zu sorgen.

Gelöst wird die Aufgabe vorrichtungsgemäß durch die Merkmale des Patentanspruchs 1, verfahrensmäßig durch die Merkmale des Patentanspruchs 2. Vorteilhafte Ausführungen sind in den Unteransprüchen aufgezeigt.

Der Erfindung liegt auch hier die Idee zugrunde, eine Überwachung der Luftqualität vorzunehmen, um so eine Möglichkeit zu schaffen, die Besatzung rechtzeitig warnen zu können, so dass für eine ausreichende Belüftung oder bedarfsgerechte Nachregelung /Steuerung über eine vorzugsweise fahrzeugeigene ABC- Schutzbelüftung gesorgt werden kann. Durch ein oder mehrere Sensoren innerhalb des Fahrzeuggehäuses wird die Konzentration des Kohlendioxids als Leitgas der Luftgüte überwacht. Über eine automatischen Steuerung der CAN- Bus fähigen Sensoreinheiten kann eine Verbesserung der Luftgüte eingeleitet werden. Die Kombination mit mehreren chemischen Sensoren in der Außenluft bzw. Zuluft steuert den Betriebsmodus, ob im Zuluftbetrieb oder Umluftbetrieb gefahren wird. Des Weiteren dient die Überwachung der Luftqualität dem Monitoring eines oder mehrerer im Fahrzeug vorhandener ABC- Filter der ABC- Schutzbelüftungsanlage. Die Konzentration des CO₂ erlaubt dabei einen Rückschluss auf die Sättigung der Filter, sodass ein Signal ausgegeben werden kann, wann die Filter gewechselt werden müssen.

Durch den Einsatz von CO₂ -Sensoren kann nunmehr der Innenraum eines ABC- dichten Fahrzeugs unter minimaler Energieaufwendung mit Luft ausreichender Güte belüftet werden. Bei Abweichung des Leitwertes von Grenzwerten ist zusätzliche eine Nutzerwarnung möglich. Auf einen bisher verwendeten Druckdifferenzsensor zur Filterüberwachung der Filter der Schutzbelüftungsanlage kann verzichtet werden. Bei Umstellung der Klimaanlage auf alternative Kältemittel wie CO₂ können die CO₂ -Sensoren zusätzlich als Leckwarnung im Kältemittelkreislauf dienen.

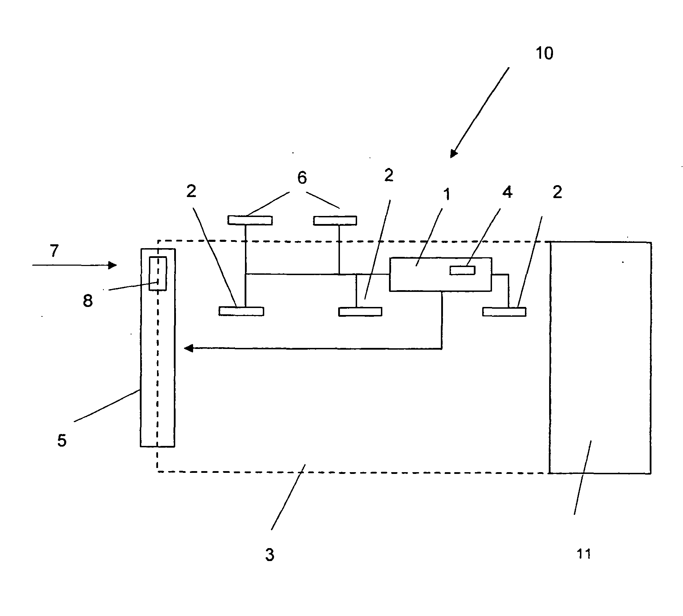

Anhand eines Ausführungsbeispiels mit Zeichnung soll die Erfindung näher erläutert werden. Es zeigt die einzige Figur eine Blockbilddarstellung einer Regel- bzw. Steuereinrichtung 1, die mit ein oder mehreren CO₂ -Sensoren 2 innerhalb eines gestrichelt dargestellten Fahrzeuginnenraumes 3 eines mit 10 angedeuteten Fahrzeuges mit Fahrerhaus 11 verbunden ist. In einem Speicher 4 hinterlegt sind Schwellwerte über die Luftgüte, die unter anderem durch den CO₂ -Gehalt beschrieben werden kann. Wird ein CO₂ -Schwellwert überschritten, erfolgt eine Warnung, beispielsweise mittels Sprachausgabe über die fahrzeugeigene Bordverständigungsanlage, an einen Nutzer bzw. eine Besatzung (nicht näher dargestellt) im Fahrzeuginnenraum 3. In einer ersten Variante kann dieser dann die Einleitung von Maßnahmen für eine bessere Luftgüte hervorrufen. Alternativ ist jedoch vorgesehen, dass eine automatische Steuerung durch die Einrichtung 1 ausgelöst wird. Um den Betriebsmodus für die ABC-Schutzbelüftungsanlage 5 zu wählen, werden Daten weiterer chemischer Sensoren 6 außerhalb sowie ggf. innerhalb des Fahrzeugs einbezogen. Ist die Umgebungsluft 7 chemisch verseucht, bzw. überschreitet dieser Wert einen Schwellwert, kann die Anlage 5 mit einem minimalen Frischluftanteil (zur Erhaltung des Überdrucks) gefahren werden. Kann hingegen die Außenluft 7 genutzt werden, wird die Schutzanlage 5 vorzugsweise in den Zuluftbetrieb zugeschaltet.

Des Weiteren kann durch die Überwachung der Luftgüte im Fahrzeuginnenraum 3 auf den Zustand eines fahrzeugeigenen ABC- Filters 8 geschlossen werden, ob dieser beispielsweise mechanisch verstopft ist, wenn bereits nach kurzer Zeit eine Verringerung der Luftgüte bzw. Erhöhung des CO₂Anteils in der Luft im Fahrzeug detektiert wird. Eine derartige Information ließe sich beispielsweise durch Angabe der Anzahl der Besatzungsmitglieder und hinterlegten Erfahrungswerten ableiten. Alternativ kann dies durch Abgleich mit anderen Sensoren, z.B. über Überdruck / Druckdifferenzen ergänzt bzw. bestätigt werden.

Es versteht sich, dass auch das Fahrerhaus 11 in die Überwachung der Luftgüte eingebunden und mit CO₂ -Sensoren bestückt werden kann. Dazu ist vorzugsweise eine weitere Regel- und Steuereinrichtung vorgesehen (nicht näher dargestellt), die gleichfalls die ABC-Schutzbelüftungsanlage 5 zuschalten und sauerstoffhaltige Luft in das Fahrerhaus 11 einbinden kann.

## Patentansprüche

1. ABC-dichtes Fahrzeug oder Labor (10) mit wenigstens einer ABC-Schutzbalüfturgaanlage (5) und zumindest einem ABC-Filter (8), einer Regel- bzw. Steuereinrichtung (1), die mit einem oder mehreren CO₂-Sensoren (2) innerhalb eines Fahrzeuginnanraumes (3) verbunden ist, sowie einem Speicher (4) mit hinterlegten Schwellwerten über die Luftgüte des Fahrzeuginnenraumes (3), die durch den CO₂-Gehalt in der Luft beschrieben werden kann, wobei wenn ein CO₂-Schwellenwert überschritten wird eine Warnung an einen Nutzer bzw. eine Besatzung im Fahrzeuginnenraum erfolgt und das Einleiten von Maßnahmen für eine bessere Luftgüte angeregt wird, sowie weitere chemische Sensoren (6) außerhalb des Fahrzeugs, deren Daten einbezogen werden, um die Schutzbelüftungsanlage (5) auf Umluftbetrieb oder Zuluftbetrieb zuzuschalten.

2. Verfahren zur Regelung der Luftgüte in einem ABC-dichten Fahrzeug oder Labor (10) mit wenigstens einer ABC-Schutzbelüftungsanlage (5) und zumindest einem ABC-Filter (8), einer Regel- bzw. Steuereinrichtung (1), die mit ein oder mehreren CO₂-Sensoren (2) innerhalb eines Fahrzeuginnenraumes (3) verbunden ist, sowie einem Speicher (4) mit hinterlegten Schwellwerten über die Luftgüte des Fahrzeuginnenraumes (3), die durch den CO₂-Gehalt in der Luft beschrieben werden, wobei, wenn ein CO₂-Schwellwert überschritten wird, eine Warnung an einen Nutzer bzw. eine Besatzung im Fahrzeuginnenraum (3) erfolgt und das Einleiten von Maßnahmen für eine bessere Luftgüte angeregt wird, wobei Daten weiterer chemischer Sensoren (6) außerhalb des Fahrzeugs einbezogen werden, um die Schutzbelüftungsanlage (5) auf Umluftbetrieb oder Zuluftbetrieb zuzuschalten.

3. Verfahren nach Anspruch 2, **dadurch gekennzeichnet, dass** der Betriebszustand bzw. die Funktion des / der fahrzeugeigenen ABC-Filter (8) überwacht werden kann.

4. Verfahren nach Anspruch 3, **dadurch gekennzeichnet, dass** die Überwachung durch die CO₂-Sensoren erfolgt.

5. Verfahren nach Anspruch 3, **dadurch gekennzeichnet, dass** die Überwachung in Sicht einer mechanischen Verstopfung des Filters (8) durch Angabe der Anzahl der Besatzungsmitglieder und hinterlegten Erfahrungswerten abgeleitet wird.

6. Verfahren nach Anspruch 4, **dadurch gekennzeichnet, dass** die Überwachung alternativ durch Abgleich mit anderen Sensoren, z.B. über Überdruck / Druckdifferenzen ergänzt bzw. bestätigt wird.

## Claims

1. NBC-sealed vehicle or laboratory (10) having at least one NBC protection ventilation system (5) and at least one NBC filter (8), a closed-loop or open-loop control device (1) which is connected to one or more CO₂ sensors (2) within a vehicle interior (3), and a memory (4) with stored threshold values relating to the air quality of the vehicle interior (3), to which the CO₂ content in the air can be written, with a warning being passed to a user or a crew in the vehicle interior when a CO₂ threshold value is exceeded, and with measures being initiated to improve the air quality, as well as further chemical sensors (6) outside the vehicle, whose data is used to switch the protection ventilation system (5) from recirculating air operation to external air operation.

2. Method for closed-loop control of the air quality in an NBC-sealed vehicle or laboratory (10) having at least one NBC protection ventilation system (5) and at least one NBC filter (8), a closed-loop or open-loop control device (1) which is connected to one or more CO₂ sensors (2) within a vehicle interior (3), and a memory (4) with stored threshold values relating to the air quality of the vehicle interior (3), to which the CO₂ content in the air can be written, with a warning being passed to a user or a crew in the vehicle interior (3) when a CO₂ threshold value is exceeded, and with measures being initiated to improve the air quality, as well as further chemical sensors (6) outside the vehicle, whose data is used to switch the protection ventilation system (5) from recirculating air operation to external air operation.

3. Method according to Claim 2, **characterized in that** the operating state or the function of the vehicle's own NBC filter or filters (8) can be monitored.

4. Method according to Claim 3, **characterized in that** the monitoring is carried out by means of the CO₂ sensors.

5. Method according to Claim 3, **characterized in that** the monitoring is derived, with respect to mechanical blocking of the filter (8) by stating the number of crew members and stored empirical values.

6. Method according to Claim 4, **characterized in that** the monitoring is alternatively added to or confirmed by matching to other sensors, for example relating to overpressure/pressure differences.

## Revendications

1. Véhicule ou laboratoire (10) étanches ABC, présentant
au moins une installation (5) d'aération protégée ABC et au moins un filtre ABC (8),
un dispositif (1) de régulation ou de commande relié à un ou plusieurs détecteurs (2) de CO₂ situés à l'intérieur de l'habitacle (3) du véhicule et
une mémoire (4) dans laquelle sont conservées des valeurs de seuil concernant la qualité de l'air à l'intérieur de l'habitacle (3) du véhicule, qualité qui peut être décrite par la teneur en CO₂ dans l'air,
un avertissement à un utilisateur ou un occupant de l'habitacle du véhicule ayant lieu et le lancement de mesures d'amélioration de la qualité de l'air étant activé si une valeur de seuil de CO₂ est dépassée,
ainsi que d'autres détecteurs chimiques (6) situés à l'extérieur du véhicule et dont les données sont prises en compte pour commuter l'installation (5) de ventilation protégée en mode à recirculation d'air ou en mode d'amenée d'air frais.

2. Procédé de régulation de la qualité de l'air à l'intérieur d'un véhicule ou d'un laboratoire (10) étanches ABC présentant
au moins une installation (5) d'aération protégée ABC et au moins un filtre ABC (8),
un dispositif (1) de régulation ou de commande relié à un ou plusieurs détecteurs (2) de CO₂ situés à l'intérieur de l'habitacle (3) du véhicule et
une mémoire (4) dans laquelle sont conservées des valeurs de seuil concernant la qualité de l'air à l'intérieur de l'habitacle (3) du véhicule, qualité qui peut être décrite par la teneur en CO₂ dans l'air,
un avertissement à un utilisateur ou un occupant de l'habitacle (3) du véhicule ayant lieu et le lancement de mesures d'amélioration de la qualité de l'air étant activé si une valeur de seuil de CO₂ est dépassée,
des données d'autres détecteurs chimiques (6) situés à l'extérieur du véhicule étant prises en compte pour commuter l'installation (5) de ventilation protégée en mode à recirculation d'air ou en mode d'amenée d'air frais.

3. Procédé selon la revendication 2, **caractérisé en ce que** l'état de fonctionnement ou le bon fonctionnement du ou des filtres ABC (8) propres peuvent être surveillés.

4. Procédé selon la revendication 3, **caractérisé en ce que** la surveillance s'effectue par l'intermédiaire des détecteurs de CO₂.

5. Procédé selon la revendication 3, **caractérisé en ce que** la surveillance du colmatage mécanique du filtre (8) découle de l'indication du nombre des occupants et de valeurs d'expérience conservées en mémoire.

6. Procédé selon la revendication 4, **caractérisé en ce que** la surveillance est en variante complétée ou confirmée par comparaison avec d'autres détecteurs, par exemple de surpression ou de différences de pression.
